Europäisches Patentamt

European Patent Office

Office européen des brevets

(19)

(11) EP 1 696 048 A1

(12) EUROPEAN PATENT APPLICATION
published in accordance with Art. 158(3) EPC

(43) Date of publication:
30.08.2006 Bulletin 2006/35

(51) Int Cl.:
C23C 2/28 (2006.01)    C23C 2/06 (2006.01)
C22C 38/00 (2006.01)    C22C 38/06 (2006.01)
C22C 38/58 (2006.01)    C21D 9/46 (2006.01)

(21) Application number: 04807637.6

(22) Date of filing: 16.12.2004

(86) International application number:
PCT/JP2004/019280

(87) International publication number:
WO 2005/061750 (07.07.2005 Gazette 2005/27)

(84) Designated Contracting States:
DE FR GB

(30) Priority: 19.12.2003 JP 2003423233

(71) Applicant: JFE Steel Corporation
Tokyo (JP)

(72) Inventors:
• MATSUDA, Hiroshi
c/o Intellectual Property Dept.
Chiyoda-ku, Tokyo 1000011 (JP)
• TAIRA, Shoichiro
c/o Intellectual Property Dept.
Chiyoda-ku, Tokyo 1000011 (JP)
• ONO, Keisuke
c/o Intellectual Property Dept.JFE S
da-ku, Tokyo 1000011 (JP)

• URABE, Toshiaki
c/o Intellectual Property Dept.JF
cHiyoda-ku, Tokyo 1000011 (JP)
• NAGATAKI, Yasunobu
c/o Intellectual Property Dept.
Chiyoda-ku, Tokyo 1000011 (JP)
• TANAKA, Yasushi
c/o Intellectual Property Dept.
iyoda-ku, Tokyo 1000011 (JP)
• SAKURAI, Michitaka
c/o Intellectual Property Dept.
Chiyoda-ku, Tokyo 1000011 (JP)
• SUGIMOTO, Yoshiharu
c/o Intellectual Property Dept
Chiyoda-ku, Tokyo 1000011 (JP)

(74) Representative: HOFFMANN EITLE
Arabellastrasse 4
81925 München (DE)

(54) METHOD FOR PRODUCING ALLOYED ZINC HOT DIP GALVANIZED STEEL SHEET

(57) A galvannealed steel sheet is manufactured by preparing a hot-dip galvanized steel sheet, alloying the steel sheet, and controlling time and temperature for alloying thereof depending on Si and Al contents. The hot-dip galvanized steel sheet contains 0.05 to 0.30% C, 0.01 to 2.0% Si, 0.08 to 3.0% Mn, 0.003 to 0.1% P, 0 to 0.07% S, 0.01 to 2.5% Al, 0 to 0.007% N, by mass, and the balance being Fe and inevitable impurities. Alloying time and temperature are controlled by the formula [$Si + Al \geq 1.5 \times 10^{-7} \times t^{0.75} \times (T - 465)^3 + 0.117$], where t is the total time (sec) of holding the sheet at 465 °C or more on alloying the coating layer thereon, and T is the average temperature (°C) of the sheet during the total time t (sec) of holding the steel sheet at 465°C or more on alloying the coating layer thereon.

FIG. 3 (a)

ALLOYING TREATMENT TEMPERATURE: 600°C (s)

## Description

### TECHNICAL FIELD

The present invention relates to a method for manufacturing high strength galvannealed steel sheet that has excellent stability in mechanical properties and is used in industrial fields including automobiles and electric sectors.

### BACKGROUND ART

Improvement in the fuel consumption of automobiles has become a serious issue from the point of global environment conservation. In that situation, the automobile industry enhances the activity of decreasing in the body sheet thickness to lighten the car body by increasing the strength of the car body materials. Since, however, the increased strength of steel sheet results in the decrease in ductility, or in forming workability, the industry waits for the development of materials that have both the high strength and the high formability.

Responding to the request, there have been developed various steel sheets, including ferrite-martensite dual-phase steels and TRIP steels utilizing the transformation-induced plasticity of retained austenite. Those steel sheets may have a coating thereon to improve the rust-preventive performance during use period. Specifically, widely applied steel sheets for these uses are galvannealed steel sheets which are not simply coated thereon but being subjected to heat treatment after coating to diffuse Fe in the steel sheet into the coating layer, thereby assuring press-formability, spot weldability, and paint adhesion. Many kinds of that type of steel sheets have been developed.

For example, Patent Document 1 discloses a galvannealed steel sheet that has excellent formability, and Patent Document 2 discloses a method for manufacturing a galvanized steel sheet that gives high strength and high ductility, and further shows excellent rust-preventive performance. From the point of attaining both the coatability and various characteristics, Patent Document 3 discloses a galvannealed steel sheet which has excellent local ductility, improves coating wettability and anti-powdering property, and gives excellent ductility; and Patent Document 4 and Patent Document 5 disclose a 440 to 640 MPa grade hot-dip galvanized steel sheet having excellent coatability, and a method for manufacturing thereof. Regarding the improvement of alloying rate and adhesion of coating layer, Patent Document 6 and Patent Document 7 disclose a high tensile galvannealed steel sheet having excellent coatability and adhesion of coating layer through the immersion of steel sheet in a coating bath after Ni-precoating and after rapid heating at relatively low temperature, thereby conducting alloying operation, and a method for manufacturing thereof. Patent Document 8 discloses a steel sheet applying Cu-precoating and a method for manufacturing thereof.

Patent Document 1: JP-A-11-279691, (the term "JP-A" referred to herein signifies the "Unexamined Japanese Patent Publication"),

Patent Document 2: JP-A-2002-38248,

Patent Document 3: JP-A-2002-30403,

Patent Document 4: JP-A-2000-234129

Patent Document 5: JP-A-2000-160290.

Patent Document 6: JP-A-4-333552,

Patent Document 7: JP-A-4-346644,

Patent Document 8: JP-A-11-12712, and

Patent Document 9: JP-A-2001-11538.

The above inventions were, however, derived from the viewpoints of attainingboth the improvement inpress-formability and other characteristics and the coatability, and they do not consider the stability of mechanical properties.

For example, Patent Document 1 describes that the addition of Mn by an amount of 15 times or more the amount of C significantly delays the progress of pearlite and bainite transformation by reheating for alloying the coating layer, thus allowing the martensite and retained austenite to remain by the amounts from 3 to 20% even after cooling after the alloying treatment at temperatures ranging from 500°C to 600°C. Since, however, the mechanical properties vary with the alloying heat treatment conditions, the method may raise problems in practical applications.

Patent Document 2 raises a cost problem because the sheet travels through CGL after passing through CAL.

Patent Document 3 determines the alloying treatment temperature based on the relation between the amount of Si and the amount of Fe. As described in detail in the present specification later, however, actually the influence of holding time is also significant, and sole temperature control cannot attain stable mechanical properties.

Patent Document 4 describes that the presence of Ni and Cu allows the total content of Si and Al to become a relatively high level so that, even the alloying treatment at about 550°C, no deterioration of ductility occurs. Actually, however, the influence of holding time is significant, and sole temperature control cannot attain stable mechanical properties.

Patent Document 9 discloses a method for manufacturing high tensile hot-dip galvannealed steel sheet that decreases the dispersion of mechanical properties without adding large amounts of alloying element. The method attains high strength by a combination of solid solution strengthening and precipitation strengthening. For the mechanical properties that were significantly dispersed in the related art, the method stabilizes them by appropriately controlling the soaking temperature (or the recrystallization annealing temperature) in the coating line. Patent Document 9, however, does not consider the dispersion of mechanical properties caused by the dispersion of alloying treatment conditions of the coating layer, and the effect is not satisfactory.

Patent Document 5 describes that the addition of Mo suppresses the transformation of austenite, remained in the previous stages, to pearlite when the steel sheet is heated to about 550°C, and is effective to ultimately assure the amount of retained austenite. As described later in the present description, however, sole addition of Mo may fail to attain the effect depending on the alloying heat treatment condition.

The galvannealed steel sheet is manufactured by applying heat treatment after immersing the steel sheet in a coating bath, thereby diffusing Fe in the steel sheet into the coating layer. From the point of coating adhesion and sliding property, however, it is necessary to accurately control the Fe content in the coating layer and the coating layer structure. Since the degree of Fe diffusion into the coating layer significantly differs with the composition of steel sheet, the heat treatment conditions are required to vary with individual steel grades. Furthermore, even with the same steel grade, the heat treatment pattern shall be varied depending on the coating weight, the steel sheet thickness, and the sheet travel speed. On varying the heat treatment pattern, the mechanical properties of the material vary. For the case of low alloy composition found in, for example, a mild steel sheet, alloying of coating layer proceeds at relatively low temperatures and within short time of heat treatment, and the structure of the steel sheet is occupied by ferrite single phase, thus the variations in mechanical properties resulting from alloying treatment did not raise serious problems. The high tensile steel sheets which increase in their application fields in recent years, however, contain relatively large amounts of alloying components, and are difficult in alloying thereof. Accordingly, the high tensile steel sheets may need heat treatment at high temperatures or for a long period. Furthermore, since the high tensile steel sheets utilize the precipitation strengthening and the strengthening by a hard secondary phase, they often generate deterioration or dispersion of mechanical properties under the influence of the alloying heat treatment pattern.

To those kinds of issues, Patent Document 6, Patent Document 7, and Patent Document 9 propose methods to solve the issues by facilitating the alloying treatment. The methods proposed by Patent Document 6 and Patent Document 7, however, need a step of Ni-precoating, which increases the cost, and apply rapid low temperature heating (450°C to 500°C) before coating, which needs to conduct control of steel sheet structure and the like, before the CGL travel, to attain the desired mechanical properties. Patent Document 9 proposes a steel sheet applying Cu-precoating to allow the rapid low temperature heating at high temperatures, and a method for manufacturing thereof. Also in that case, the Cu-precoating is required, which increases the cost. In actual press-forming and the like, a material that has excellent workability is required to assure the formability, and at the same time, to assure stable operability and shape accuracy of products, a steel sheet that gives small dispersion of strength and ductility is required. The need increases particularly to the high strength steel sheets. As described above, however, the inventions of hot-dip galvanized steel sheets in the related art aimed to establish both the coatability and the mechanical properties, and did not pay detail attention on the deterioration of coating characteristics and variations of mechanical properties such as strength and elongation during the alloying treatment in the manufacturing process.

**DISCLOSURE OF THE INVENTION**

It is an object of the present invention to provide a galvannealed steel sheet that suppresses the dispersion in the mechanical properties through the control of the alloying condition of the coating layer, and a method for manufacturing thereof.

To attain the object, the present invention provides a method for manufacturing a galvannealed steel sheet comprising the steps of: preparing a hot-dip galvanized steel sheet; applying alloying treatment to the hot-dip galvanized steel sheet; and controlling time and temperature of the alloying treatment depending on the content of Si and of Al.

The hot-dip galvanized steel sheet consists essentially of 0.05 to 0.30% C, 0.01 to 2.0% Si, 0.08 to 3.0% Mn, 0.003 to 0.1% P, 0 to 0.07% S, 0.01 to 2.5% Al, 0 to 0.007% N, by mass, and balance of Fe and inevitable impurities.

The step of controlling time and temperature of the alloying treatment controls the time and the temperature of the alloying treatment in accordance with the formula given below depending on the content of Si and of Al,

$$Si + Al \geqq 1.5 \times 10^{-7} \times t^{0.75} \times (T - 465)^3 + 0.117$$

where t is the total time (sec) of holding the steel sheet at 465 °C or higher temperature on alloying the coating layer thereon, and T is the average temperature(°C) of the steel sheet during the total time t (sec) of holding the steel sheet at 465°C or higher temperature on alloying the coating layer thereon.

The hot-dip galvanized steel sheet may further contain at least one element selected from the group consisting of 0.01 to 0.1% Ti, 0.01 to 0. 1% Nb, 0.0003 to 0.0050% B, 0.005 to 2.0% Ni, and 0.005 to 2.0% Cu, by mass.

The present invention further provides a method for manufacturing a galvannealed steel sheet comprising the steps of: preparing a hot-dip galvanized steel sheet; applying alloying treatment to the hot-dip galvanized steel sheet; and controlling time and temperature of the alloying treatment depending on the content of Si, Al, Cr, Mo, and V.

The hot-dip galvanized steel sheet consists essentially of 0.05 to 0.30% C, 0.01 to 2.0% Si, 0.08 to 3.0% Mn, 0.003 to 0.1% P, 0 to 0.07% S, 0.01 to 2.5% Al, 0 to 0.007% N, by mass, further at least one element selected from the group consisting of 0.01 to 2.0% Cr, 0.005 to 2.0% V, and 0.005 to 2.0% Mo, by mass, and balance of Fe and inevitable impurities.

The step of controlling time and temperature of the alloying treatment controls the time and the temperature of the alloying treatment in accordance with the formula given below depending on the content of Si, Al, Cr, Mo, and V,

$$\text{Si} + \text{Al} + 5 \times \text{Cr} + 15 \times \text{Mo} + 15 \times \text{V} \geqq 1.5 \times 10^{-7} \times t^{0.75} \times (T - 465)^3 + 0.117$$

where t is the total time (sec) of holding the steel sheet at 465°C or higher temperature on alloying the coating layer thereon, and T is the average temperature(°C) of the steel sheet during the total time t (sec) of holding the steel sheet at 465°C or higher temperature on alloying the coating layer thereon.

The hot-dip galvanized steel sheet may further contain at least one element selected from the group consisting of 0.01 to 0.1% Ti, 0.01 to 0.1% Nb, 0.0003 to 0.0050% B, 0.005 to 2.0% Ni, and 0.005 to 2.0% Cu, by mass.

The present invention provides a high strength galvannealed steel sheet giving small dispersion of mechanical properties, thus the present invention offers precious applicability to industries, and particularly the present invention is extremely beneficial in weight-reduction and rust-prevention of automobile body, giving significant industrial effects.

**BRIEF DESCRIPTION OF THE DRAWINGS**

Fig.1(a) shows a schematic drawing of the relation of alloying temperature, alloying time, tensile strength, and total elongation according to the related art.

Fig.1(b) shows a schematic drawing of the relation of alloying temperature, alloying time, tensile strength, and total elongation according to the present invention.

Fig.2 is a graph showing the stability of mechanical properties in relation to the chemical composition of the steel and the alloying treatment temperature for the cases of 15 to 30 sec of alloying treatment time.

Fig. 3(a) to (d) are the graphs showing the stability of mechanical properties in relation to the steel sheet composition and the alloying heat treatment temperature for the cases of alloying treatment temperatures of 600°C, 550°C, 520°C, and 500 °C, respectively.

**EMBODIMENT FOR CARRYING OUT THE INVENTION**

The inventors of the present invention studied the causes affecting the dispersion of mechanical properties of high strength galvannealed steel sheets, and found that the mechanical properties are significantly affected by the alloying heat treatment after the immersion of the sheet in a coating bath even under a precise control of the conditions of annealing before the immersion of the sheet in the coating bath or the conditions of heat treatment after the annealing and before the immersion.

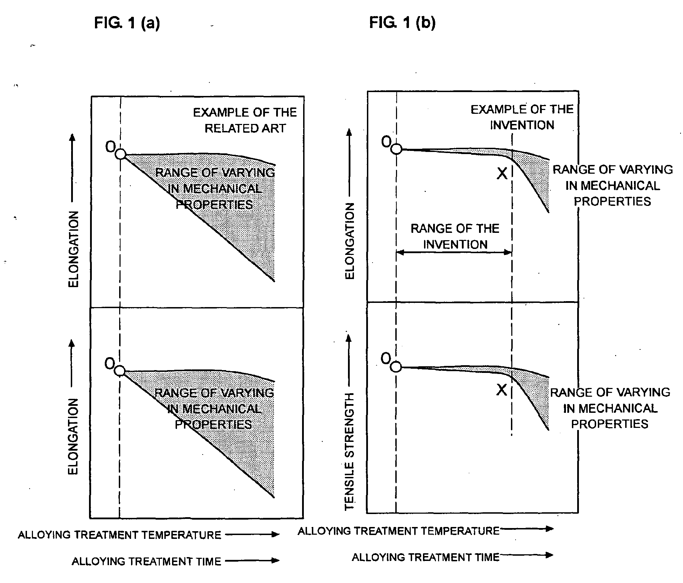

Fig. 1(a) and Fig. 1(b) show schematic drawings of the relation of alloying temperature, alloying time, tensile strength, and total elongation. In these figures, the point O signifies the case of no alloying treatment after the immersion of sheet in the coating bath at temperatures ranging from 460°C to 465 ° C. Fig.1(a) is for the case that conventional steel sheets are manufactured under the control of ordinary alloying conditions. The figure shows that, depending on the increase in the alloying temperature and/or the increase in the alloying time, the tensile strength and the total elongation decrease in some cases, giving large variations in the mechanical properties depending on the alloying conditions. Generally, the alloying treatment conditions are controlled so as the Fe content in the coating layer and the coating layer structure to become optimum. The alloying conditions, however, differ depending on the necessary coating weight even with the same steel grade and composition. In addition, when the sheet travel speed is changed owing to the difference in sheet thickness or the like, the optimum alloying conditions vary. In this case, if the variations of mechanical properties become significant responding to the alloying conditions as seen in Fig. 1(a), the mechanical properties such as strength and elongation of the final product vary, which induces dispersion of the shape accuracy and the like in the forming stage at users, and further raises necessity of changing the forming condition for the varied mechanical properties in some cases, thereby significantly deteriorating the operability of press-forming stage.

The inventors of the present invention focused on that the degree of effect of alloying heat treatment conditions on the mechanical properties significantly differs with the chemical composition of the steel, and gave detail study on the relation of the chemical composition and the alloying heat treatment temperature and time. The study revealed that an appropriate control of the chemical components of the steel sheet assures no deterioration of the mechanical properties within a range of alloying heat treatment conditions necessary in ordinary operations, which allows manufacturing a steel sheet having very little dispersion of mechanical properties. The detail description is given in the paragraphs of reasons for specifying the components in the following. The inventors of the present invention studied the effect of alloying conditions on materials having various chemical compositions, and identified that the degree of the effect significantly differs with the chemical composition. Then, the alloying conditions were related to the time for holding the steel sheet at or above the coating bath temperature for alloying after the immersion in the coating bath, and the average temperature within the time, thereby establishing the relation to the chemical composition. Based on thus established relation, there was determined the steel sheet manufacturing conditions that do not deteriorate the mechanical properties and give very little dispersion thereof within an alloying condition varying range which appears resulting from the variations of sheet thickness, coating weight, sheet travel speed, and the like occurred in normal manufacturing state. The schematic drawing of the conditions is given in Fig. 1(b). As seen in Fig. 1(b), through an appropriate correlation of steel sheet composition, the condition of very little deterioration in the mechanical properties, (point X), is available compared with the case of not-applying the alloying treatment (point O, 460°C to 465°C of coating bath temperature). By defining the relation between the alloying condition range (point O to point X) and the steel sheet composition, it has become possible to obtain the steel sheet which gives very little dispersion in the mechanical properties within a condition-varying range necessary in actual manufacturing process.

On carrying out the present invention, the range of limiting the chemical composition and the reason for specifying the range are described below.

First, the reasons of limiting the chemical composition in the present invention are described in the following. The % in the following signifies % by mass.

C: 0.05 to 0.30%

Carbon is an element to stabilize austenite and is necessary to assure the amount of martensite and to keep the austenite remaining at room temperature. If the C content is less than 0.05%, however, it becomes difficult to ensure strength of steel sheet and to assure the necessary amount of retained austenite, thus failing in satisfying the desired mechanical properties even when the manufacturing conditions are optimized. If the C content exceeds 0.30%, the hardening of welded part and heat-affecting zone becomes significant, thereby deteriorating the weldability. Accordingly, the C content is specified to a range from 0.05 to 0.30%, preferably from 0.05 to 0.2%.

Si: 0.01 to 2.0%

Silicon is an effective element to strengthen the steel, and is a ferrite-forming element. Since Si enhances the C-enrichment in austenite and suppresses the formation of carbide, Si enhances the retained austenite formation. Consequently, Si is often added to composite steels and TRIP steels. The effect is attained at 0.01% or larger Si content. Excess addition of Si, however, deteriorates formability and toughness because of the increase in the amount of solid solution in ferrite, and deteriorates the surface property caused by the generation of red-rust and the like, and deteriorates the coating attachment and adhesion in the case of hot-dip coating. Therefore, the Si content is specified to a range from 0.01 to 2.0%.

Mn: 0.08 to 3.0%

Manganese is an element effective to strengthen the steel and to stabilize austenite, and is an element necessary to increase the volume of martensite and retained austenite. The effects are attained at 0.08% or larger Mn content. If, however, the Mn content exceeds 3.0%, the strength increase becomes significant caused by the excess amount of secondary phase and by the strengthened solid solution. Consequently, the Mn content is specified to a range from 0.8 to 3.0%, preferably from 1.0 to 3.0%.

P: 0.003 to 0.1%

Phosphorus is an effective element to strengthen the steel, and the effect is attained at 0.003% or larger P content. If, however, the P content exceeds 0.1%, the grain-boundary segregation induces brittleness, thereby deteriorating the crashworthiness. Accordingly, the P content is specified to a range from 0.003 to 0.1%.

S: 0 to 0.07%

Sulfur content is preferably kept as low as possible because S forms MnS and other inclusions to deteriorate the crashworthiness and to cause cracks along metal flow line in the weld. From the point of manufacturing cost, the S content is specified to 0.07% or less.

Al: 0.01 to 2.5%

Aluminum is a ferrite-forming element, enhances the C-enrichment in austenite, and suppresses the formation of carbide, thus Al performs to enhance the formation of retained austenite. The effects are attained at 0.01% or larger Al content. Owing to the effects, Al is added to composite steels and TRIP steels by a large amount in some cases. Excess addition of Al, however, induces brittleness of ferrite and deteriorates the balance of strength and ductility of material. The Al content above 2.5% increases the amount of inclusions in the steel sheet to deteriorate the ductility. Consequently, the Al content is specified to a range from 0.01 to 2.5%, preferably from 0.1 to 2.0%.

N: 0 to 0.007%

Nitrogen is the element to deteriorate the anti-aging property of the steel to the largest degree. Smaller N content is better. If the N content exceeds 0.007%, the deterioration of anti-aging property becomes significant. Accordingly, the N content is specified to 0.007% or less.

The steel sheet according to the present invention has the above basic components and iron as the main components. The term "main components" referred to herein signifies the components that do not hinder the existence of inevitable impurities and the functions of the above basic components, and rather improve their functions, or do not hinder the existence of elements which can improve the mechanical and chemical characteristics. For example, it is possible to contain one or more of Cr, V, and Mo, which are described below.

Cr: 0.01 to 2.0%

Chromium suppresses the formation of pearlite during the step of cooling from the annealing temperature. The effect is attained at 0.01% or larger Cr content. If, however, the Cr content exceeds 2.0%, the coatability may be deteriorated. Accordingly, the Cr content is specified to a range from 0.01 to 2.0%.

V: 0.005 to 2.0%

Vanadium suppresses the formation of pearlite during the step of cooling from the annealing temperature. The effect is attained at 0.005% or larger V content. If , however, the V content exceeds 2.0%, the amount of ferrite becomes excessively small to deteriorate the formability. Therefore, the V content is specified to a range from 0.005 to 2.0%.

Mo: 0.005 to 2.0%

Molybdenum is effective in resistance to delayed fracture, and the effect is attained at 0.005% or larger Mo content. If, however, the Mo content exceeds 2.0%, the formability deteriorates. Consequently, the Mo content is specified to a range from 0.005 to 2.0%.

Furthermore, one or more of Ti, Nb, B, Ni, and Cu, which are described below, can be added.

Ti, Nb: each 0.01 to 0.1%

Titanium and Nb are effective in precipitation strengthening of steel, and the effect is attained at each 0.01% or larger content. They can be added to strengthen the steel within the range specified by the present invention. If, however, the content of one of them exceeds 0.1%, the formability and the shape accuracy deteriorate. Accordingly, the content of each of Ti and Nb is specified to a range from 0.01 to 0.1%.

B: 0.0003 to 0.0050%

Boron functions to suppress the formation of ferrite from the austenite grain boundary. The effect is attained at 0.0003% or larger B content. If, however, the B content exceeds 0.0050%, the amount of ferrite becomes excessively small to deteriorate the formability. Therefore, the B content is specified to a range from 0.0003 to 0.0050%.

Ni: 0.005 to 2.0%, Cu: 0.005 to 2.0%

Nickel and Cu are elements to stabilize austenite, and have effects to keep austenite remain and also to increase the strength of steel. The effects are attained at 0.005% or larger content of Ni and of Cu. If, however, any of them is added by an amount above 2.0%, the ductility of steel deteriorates. Consequently, the content of Ni and Cu is specified to a range from 0.005 to 2.0%, respectively.

The following is the specification of the relation between the steel sheet composition and the temperature and time of alloying heat treatment.

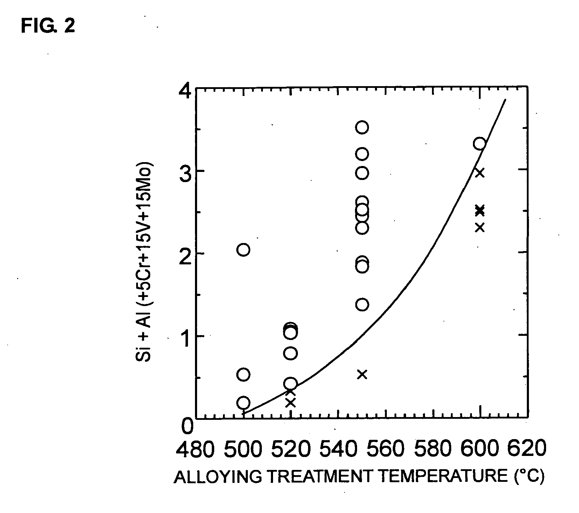

The inventors of the present invention conducted detail study of the causes affecting the dispersion of mechanical properties of high strength galvannealed steel sheet, and found that the mechanical properties are significantly affected by the alloying heat treatment after the immersion of steel sheet in the coating bath even under precise control of the annealing conditions after annealing and before immersing in the coating bath or of the heat treatment conditions before the immersion therein, and that the degree of the effect significantly differs with the steel sheet composition. Fig. 2 shows examples of the effect. The figure shows the variations in the mechanical properties for the case of heat treatment varying the alloying temperature of steel sheets having various compositions within the alloying times from 15 to 30 seconds. The vertical axis is the values of formula [Si + Al + (5 x Cr + 15 x Mo + 15 x V)] which is derived from the steel sheet composition, and the horizontal axis is the alloying temperature, (the average temperature of the steel sheet during the total time of holding the steel sheet at 465°C or higher temperature on conducting alloying treatment). The evaluation of good stability is given to the case that the difference in the mechanical properties from those of no alloying treatment gives $\Delta TS$ (kgf/mm$^2$) not larger than 2 kgf/mm$^2$ and $\Delta El$ (%) not larger than 2%. In Fig. 2, the evaluation of good stability is expressed by $\bigcirc$ mark, and the evaluation of poor stability is expressed by $\times$ mark. As seen in Fig. 2, it was found that the variations in the mechanical properties significantly depend on the chemical composition and the alloying temperature, that the chemical composition expressed by the formula [Si + Al + (5 x Cr + 15 x Mo + 15 x V)] gives good agreement with the degree of variations in the characteristics in relation to the alloying temperature, and that the alloying temperature gives increasing effect at elevated temperatures, not giving linear effect of temperature rise. Regarding the formula derived from the steel sheet composition, when the elements appeared in parentheses are not added to the steel sheet, the formula is expressed solely by Si and Al, and when Cr, Mo, and V are added, these elements have to be further taken into account.

The alloying heat treatment is given to suppress the Fe content and to control the phase structure to assure the coating layer adhesion and other characteristics. The alloying heat treatment condition differs with the chemical composition of the steel sheet, and even with the same composition, the alloying heat treatment condition has to be changed to obtain optimum coating layer depending on the coating weight and sheet travel speed. When the heat treatment pattern varies, the mechanical properties of steel sheet, particularly of high strength steel sheet, vary.

Based on the findings, the inventors of the present invention carried out further detail study of the effect of chemical composition and alloying treatment condition on the deterioration of mechanical properties, specifically conducted detail study to obtain materials that are free from the effect of alloying heat treatment pattern and that have excellent stability of mechanical properties, thereby deriving the findings described below.

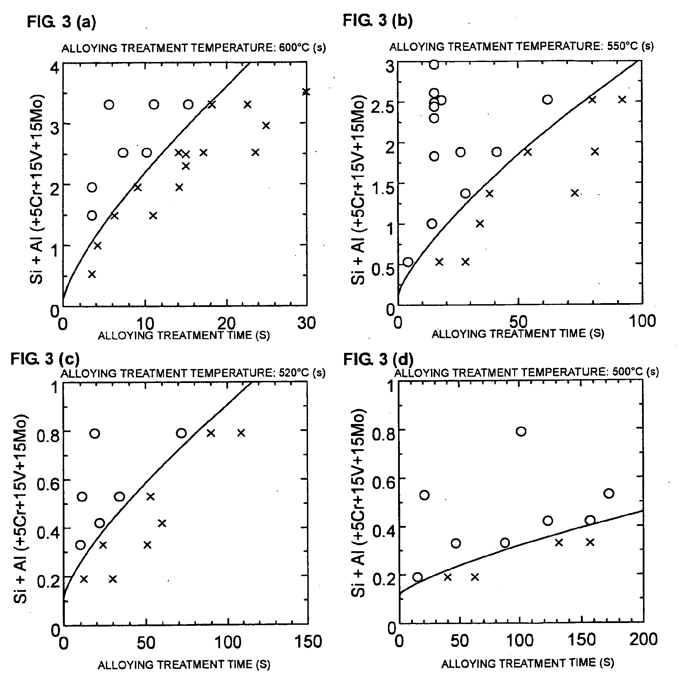

Figure 3 shows the effect of chemical composition and alloying conditions on the variations in the mechanical properties. It was found that the state of deterioration in the mechanical properties is expressed by the correlation of: the relation to the alloying temperature, given in Fig. 2; the formula [Si + Al + (5 x Cr + 15 x Mo + 15 x V)], derived from the chemical composition of the steel; and the alloying time. On the basis of the results of above studies, the variations in the mechanical properties show a good correlation with the alloying components in the steel sheet by expressing the alloying heat treatment conditions in terms of the time holding the steel sheet at the coating bath temperature (about 465°C) or above during alloying treatment, and of the average temperature within the time.

Based on the above findings, the inventors of the present invention specified the chemical composition and the alloying heat treatment conditions of steel sheet, and has established a method for manufacturing steel sheet which induces very little deterioration in the mechanical properties under variations of alloying conditions in operating process, and which assures stable mechanical properties similar to those attained in no alloying treatment operation. According to thus perfected invention, when the heat treatment condition giving the maximum temperature and time in the alloying heat treatment are T(°C) and t(sec), a material in which the dispersion of mechanical properties is suppressed can be manufactured if only the (Si + Al) in the steel sheet components satisfies the following formula,

$$\mathrm{Si + Al \geqq 1.5 \times 10^{-7} \times t^{0.75} \times (T - 465)^3 + 0.117}$$

and, when Cr, Mo, and V exist in the steel sheet, the material can be manufactured if only the [Si + Al + 5 x Cr + 15 x Mo + 15 x V] satisfies the following formula,

$$\mathrm{Si + Al + 5 \times Cr + 15 \times Mo + 15 \times V \geqq 1.5 \times 10^{-7} \times t^{0.75}}$$
$$\mathrm{\times (T - 465)^3 + 0.117}$$

For the case that the alloying heat treatment conditions are high temperature and long time, the related art focused on the suppression of precipitation of pearlite from the secondary phase. However, it was found that sole suppression of pearlite precipitation is not sufficient to prevent the deterioration of mechanical properties during the alloying treatment and that the precipitation of fine carbide in the secondary phase significantly affects the variations of mechanical properties. A presumable reason of the phenomenon is the following. When the martensite transformation occurs in cooling step, the precipitation of carbide from the secondary phase, the quantity, configuration, and distribution of the carbide vary the hardness of the secondary phase, and further, when the secondary phase remains as retained austenite, the precipitation of carbide decreases the amount of residual secondary phase and deteriorates the stability thereof, thus increasing the amount of martensite, thereby varying the mechanical properties.

The inventors of the present invention conducted detail study of the above precipitation phenomena, and found that Si and Al suppress that type of carbide precipitation, that the increase in the adding amount of Si and Al widens the range of temperature and time to attain stable mechanical properties, and that Cr, Mo, and V give stronger effect than above, or Cr gives the effect of about 5 times that of Si and Al, and Mo and V give the effect of about 15 times that of Si and Al. The alloying conditions can be correlated by the relation of the time of holding the steel sheet at the coating bath temperature (abut 465°C) or above, (hereinafter referred to simply as the "alloying time"), and the average temperature within the time, (hereinafter referred to simply as the "alloying temperature"). For the effect of alloying temperature T, as seen in Fig. 2, the effect becomes stronger at higher temperatures. Accordingly, the effect was determined recurrently using exponent approximation, not linear approximation, and a good expression of the effect was attained by cube of the difference between the alloying temperature T and the coating bath temperature (about 465°C). For the alloying time, the degree of effect of the alloying time differs with temperature, as shown in Fig. 3. Since, for both cases, however, the magnitude of the effect of alloying time decreases with increase in the alloying time, it is possible to express the effect properly by 0.75 power of the alloying time t through the exponent approximation. A presumable reason of significant increase in the degree of effect of the alloying time with the increase in the difference between the alloying temperature T and the coating bath temperature (about 465°C), and of decrease in the variations in the magnitude of effect of the alloying time t with the increase in the alloying time t is that the precipitation of carbide is controlled by diffusion rate. The coating bath temperature is not necessarily limited to about 465 ° C, and may be in a range from 440°C to 480°C. Even when the coating bath temperature varies, the range of Si and Al content can be specified by the above formula which was derived based on 465°C.

As described above, the present invention has advantages in that, when the condition givingmaximum effect on the variations in the mechanical properties among the alloying treatment conditions is selected, or when the alloying temperature and the alloying time are selected, it becomes possible to obtain a material which gives small variations in the mechanical properties during the alloying heat treatment within the condition range, or to induce no deterioration of mechanical properties within a range of variations in the conditions resulting from the variations of coating weight, sheet thickness, and sheet travel speed, occurred in normal manufacturing state.

Examples

The present invention is described in more detail in the following referring to the examples. The examples, however, do not limit the present invention, and modifications of design without changing the essence of the present invention are included in the technical range of the present invention.

Cast products were produced from steels having the respective chemical compositions shown in Table 1. After heating the cast products to 1200°C, the cast products were hot-rolled to form hot-rolled steel sheets (3.0 mm in thickness and 1200 mm in width), followed by picking and cold-rolling to form cold-rolled steel sheets (1.2 mm in thickness). The cold-rolled steel sheets were fed to a continuous hot-dip galvanizing line to heat and hold at 825°C for 120 seconds, and then were cooled at 10°C/sec of cooling rate. The cooled steel sheets were supplied to a zinc coating bath at 460°C to apply coating by a coating weight of 50/50 g/m$^2$. Alloying of the coating layer was done by an induction heater and in a succeeding heat-holding zone. By varying the line speed, the heater output, and the heat-holding and cooling conditions in the heat-holding zone, the alloying heat treatment condition was varied to prepare various galvannealed steel sheets. The GI was prepared in an off-state of the induction heater. To thus obtained materials, a temper rolling of 0.3% was applied to form JIS Class 5 test pieces. The test pieces were subjected to tensile test to determine tensile strength (TS) and total elongation (El). The evaluation of dispersion of the mechanical properties was given by comparison with the material without applying alloying treatment, in terms of TS (kgf/mm$^2$) and El (%). The evaluation of good stability was given to the case that the difference in the mechanical properties from the no alloying treatment gives $\Delta$TS (kgf/mm$^2$) not larger than 2 kgf/mm$^2$ and $\Delta$El (%) not larger than 2%. Table 2 summarizes the test results. As seen in the table, the steel sheets that satisfy the requirements specified in the present invention give small dispersion of mechanical properties, and attain desired mechanical properties.

## Table 1

| Steel grade No. | Chemical composition (% by weight) | | | | | | | | | | | | | | Si+Al+5Cr+15V +15Mo |
|---|---|---|---|---|---|---|---|---|---|---|---|---|---|---|---|
| | C | Si | Mn | sol.Al | P | S | Cr | V | Mo | Ti | Nb | B | Cu | Ni | |
| 1 | 0.190 | 0.47 | 1.90 | 1.46 | 0.010 | 0.005 | | | 0.11 | | | | | | 3.51 |
| 2 | 0.158 | 0.48 | 1.90 | 1.48 | 0.007 | 0.003 | 0.27 | | | | | | | | 3.31 |
| 3 | 0.156 | 0.49 | 1.89 | 1.50 | 0.011 | 0.003 | | 0.08 | | | | | | | 3.19 |
| 4 | 0.149 | 0.27 | 1.67 | 0.74 | 0.007 | 0.005 | | 0.13 | | | | | | | 2.96 |
| 5 | 0.075 | 0.29 | 1.83 | 0.52 | 0.007 | 0.004 | | 0.12 | | | | | | | 2.61 |
| 6 | 0.110 | 0.25 | 1.65 | 0.27 | 0.030 | 0.005 | 0.25 | 0.05 | | | | | | | 2.52 |
| 7 | 0.147 | 0.26 | 1.66 | 0.73 | 0.008 | 0.006 | | | 0.10 | | | | | | 2.49 |
| 8 | 0.151 | 0.28 | 1.68 | 0.71 | 0.008 | 0.006 | 0.29 | | | | | | | | 2.44 |
| 9 | 0.082 | 0.30 | 1.85 | 0.50 | 0.031 | 0.005 | 0.30 | | | | | | | | 2.30 |
| 10 | 0.077 | 0.31 | 1.86 | 0.53 | 0.031 | 0.005 | | | 0.08 | | | | | | 2.04 |
| 11 | 0.161 | 0.46 | 1.92 | 1.49 | 0.007 | 0.003 | | | | | | | | | 1.95 |
| 12 | 0.150 | 0.47 | 1.70 | 0.51 | 0.028 | 0.004 | 0.18 | | | | | | | | 1.88 |
| 13 | 0.081 | 0.27 | 1.84 | 0.51 | 0.031 | 0.005 | | 0.07 | | | | | | | 1.83 |
| 14 | 0.115 | 0.25 | 1.90 | 0.04 | 0.030 | 0.004 | | | 0.08 | | | | | | 1.49 |
| 15 | 0.123 | 0.27 | 1.90 | 0.05 | 0.030 | 0.004 | 0.21 | | | | | | | | 1.37 |
| 16 | 0.151 | 0.31 | 1.70 | 0.69 | 0.008 | 0.004 | | | | | | | | | 1.00 |
| 17 | 0.060 | 0.02 | 1.72 | 0.77 | 0.008 | 0.005 | | | | | | | | | 0.79 |
| 18 | 0.073 | 0.20 | 1.45 | 0.03 | 0.030 | 0.004 | | 0.02 | | | | | | | 0.53 |
| 19 | 0.062 | 0.30 | 1.51 | 0.12 | 0.028 | 0.007 | | | | | | | | | 0.42 |
| 20 | 0.080 | 0.27 | 1.60 | 0.06 | 0.032 | 0.004 | | | | | | | | | 0.33 |
| 21 | 0.055 | 0.14 | 1.57 | 0.05 | 0.008 | 0.005 | | | | | | | | | 0.19 |
| 22 | 0.155 | 0.30 | 1.70 | 0.75 | 0.007 | 0.004 | | | | 0.028 | | | | | 1.05 |
| 23 | 0.153 | 0.28 | 1.72 | 0.77 | 0.007 | 0.005 | | | | | 0.030 | | | | 1.05 |
| 24 | 0.156 | 0.27 | 1.71 | 0.76 | 0.007 | 0.005 | | | | | | 0.0010 | | | 1.03 |
| 25 | 0.156 | 0.30 | 1.73 | 0.78 | 0.008 | 0.004 | | | | | | | 0.32 | | 1.08 |
| 26 | 0.155 | 0.28 | 1.70 | 0.75 | 0.007 | 0.004 | | | | | | | | 0.21 | 1.03 |

EP 1 696 048 A1

## Table 2-1

| No. | Steel grade No. | Alloying treatment conditions | | Si+Al+5Cr +15V+ 15Mo | $1.5 \times 10^{-7} \times t^{0.75} \times (T-465)^3 +0.117$ | Mechanical properties | | Mechanical properties for without alloying case | | Deviation in mechanical properties | | Remark |
|---|---|---|---|---|---|---|---|---|---|---|---|---|
| | | T(°C) | t(s) | | | TS (kgf/mm2) | El(%) | TS (kgf/mm2) | El(%) | ΔTS | ΔEl | |
| 1 | 1 | 550 | 15.0 | 3.51 | 0.82 | 102.3 | 24.2 | 101.4 | 24.0 | 0.9 | 0.2 | Example |
| 2 | 1 | 600 | 30.0 | 3.51 | 4.85 | 93.8 | 19.1 | 101.4 | 24.0 | 7.6 | 4.9 | Comparative Example |
| 3 | 2 | 600 | 5.6 | 3.31 | 1.46 | 85.5 | 28.2 | 85.3 | 28.5 | 0.2 | 0.3 | Example |
| 4 | 2 | 600 | 11.1 | 3.31 | 2.36 | 84.7 | 27.9 | 85.3 | 28.5 | 0.6 | 0.6 | Example |
| 5 | 2 | 600 | 15.3 | 3.31 | 2.97 | 84.5 | 28.3 | 85.3 | 28.5 | 0.8 | 0.2 | Example |
| 6 | 2 | 600 | 18.2 | 3.31 | 3.37 | 80.2 | 27.5 | 85.3 | 28.5 | 5.1 | 1.0 | Comparative Example |
| 7 | 2 | 600 | 22.7 | 3.31 | 3.96 | 76.5 | 27.8 | 85.3 | 28.5 | 8.8 | 0.7 | Comparative Example |
| 8 | 3 | 550 | 15 | 3.19 | 0.82 | 81.9 | 28.5 | 83.7 | 28.7 | 1.8 | 0.2 | Example |
| 9 | 3 | 580 | 35 | 3.19 | 3.40 | 76.3 | 26.0 | 83.7 | 28.7 | 7.4 | 2.7 | Comparative Example |
| 10 | 4 | 550 | 15 | 2.96 | 0.82 | 80.5 | 27.0 | 81.0 | 26.8 | 0.5 | 0.2 | Example |
| 11 | 4 | 600 | 25 | 2.96 | 4.24 | 76.2 | 25.5 | 81.0 | 26.8 | 4.8 | 1.3 | Comparative Example |
| 12 | 5 | 550 | 15 | 2.61 | 0.82 | 61.5 | 34.2 | 62.3 | 34.8 | 0.8 | 0.6 | Example |
| 13 | 6 | 600 | 7.3 | 2.52 | 1.76 | 63.8 | 31.9 | 64.2 | 32.0 | 0.4 | 0.1 | Example |
| 14 | 6 | 600 | 10.2 | 2.52 | 2.22 | 65.0 | 30.3 | 64.2 | 32.0 | 0.8 | 1.7 | Example |
| 15 | 6 | 600 | 14.1 | 2.52 | 2.80 | 61.5 | 30.5 | 64.2 | 32.0 | 2.7 | 1.5 | Comparative Example |
| 16 | 6 | 600 | 17.2 | 2.52 | 3.23 | 60.3 | 30.4 | 64.2 | 32.0 | 3.9 | 1.6 | Comparative Example |
| 17 | 6 | 600 | 23.7 | 2.52 | 4.08 | 58.0 | 28.5 | 64.2 | 32.0 | 6.2 | 3.5 | Comparative Example |
| 18 | 6 | 550 | 18 | 2.52 | 0.92 | 62.8 | 31.3 | 64.2 | 32.0 | 1.4 | 0.7 | Example |
| 19 | 6 | 550 | 62 | 2.52 | 2.15 | 63.0 | 31.0 | 64.2 | 32.0 | 1.2 | 1.0 | Example |
| 20 | 6 | 550 | 80 | 2.52 | 2.58 | 58.7 | 30.3 | 64.2 | 32.0 | 5.5 | 1.7 | Comparative Example |
| 21 | 6 | 550 | 92 | 2.52 | 2.85 | 56.0 | 29.2 | 64.2 | 32.0 | 8.2 | 2.8 | Comparative Example |
| 22 | 7 | 550 | 15 | 2.49 | 0.82 | 80.7 | 27.1 | 80.5 | 27.8 | 0.2 | 0.7 | Example |
| 23 | 7 | 600 | 15 | 2.49 | 2.93 | 76.2 | 24.8 | 80.5 | 27.8 | 4.3 | 3.0 | Comparative Example |
| 24 | 8 | 550 | 15 | 2.44 | 0.82 | 81.8 | 27.7 | 82.6 | 27.5 | 0.8 | 0.2 | Example |
| 25 | 9 | 550 | 15 | 2.3 | 0.82 | 62.8 | 34.5 | 63.4 | 35.1 | 0.6 | 0.6 | Example |
| 26 | 9 | 600 | 15 | 2.3 | 2.93 | 58.0 | 33.6 | 63.4 | 35.1 | 5.4 | 1.5 | Comparative Example |
| 27 | 10 | 500 | 15 | 2.04 | 0.17 | 61.3 | 33.5 | 61.6 | 34.8 | 0.3 | 1.3 | Example |
| 28 | 11 | 600 | 3.5 | 1.95 | 1.06 | 79.8 | 28.0 | 81.1 | 27.2 | 1.3 | 0.8 | Example |
| 29 | 11 | 600 | 9.1 | 1.95 | 2.05 | 78.4 | 26.1 | 81.1 | 27.2 | 2.7 | 1.1 | Comparative Example |
| 30 | 11 | 600 | 14.2 | 1.95 | 2.82 | 74.5 | 24.9 | 81.1 | 27.2 | 6.6 | 2.3 | Comparative Example |
| 31 | 12 | 550 | 26 | 1.88 | 1.18 | 81.3 | 26.4 | 82.0 | 26.8 | 0.7 | 0.4 | Example |
| 32 | 12 | 550 | 41 | 1.88 | 1.61 | 80.2 | 25.2 | 82.0 | 26.8 | 1.8 | 1.6 | Example |
| 33 | 12 | 550 | 54 | 1.88 | 1.95 | 79.7 | 24.3 | 82.0 | 26.8 | 2.3 | 2.5 | Comparative Example |
| 34 | 12 | 550 | 81 | 1.88 | 2.60 | 75.2 | 25.5 | 82.0 | 26.8 | 6.8 | 1.3 | Comparative Example |
| 35 | 13 | 550 | 15 | 1.83 | 0.82 | 63.9 | 34.3 | 64.8 | 34.5 | 0.9 | 0.2 | Example |
| 36 | 14 | 600 | 3.5 | 1.49 | 1.06 | 61.9 | 28.1 | 61.7 | 27.9 | 0.2 | 0.2 | Example |
| 37 | 14 | 600 | 6.3 | 1.49 | 1.58 | 59.9 | 25.7 | 61.7 | 27.9 | 1.8 | 2.2 | Comparative Example |
| 38 | 14 | 600 | 11.0 | 1.49 | 2.35 | 54.2 | 26.8 | 61.7 | 27.9 | 7.5 | 1.1 | Comparative Example |
| 39 | 15 | 550 | 28 | 1.37 | 1.24 | 62.0 | 29.2 | 62.8 | 28.7 | 0.8 | 0.5 | Exxample |
| 40 | 15 | 550 | 38 | 1.37 | 1.53 | 59.9 | 28.7 | 62.8 | 28.7 | 2.9 | 0.0 | Comparative example |

Table 2-2

| No. | Steel grade No. | Alloying treatment conditions | | Si+Al+5Cr +15V+ 15Mo | $1.5 \times 10^{-7} \times t^{0.75} \times (T-465)^3 +0.117$ | Mechanical properties | | Mechanical properties for without alloying case | | Deviation in mechanical properties | | Remark |
|---|---|---|---|---|---|---|---|---|---|---|---|---|
| | | T(°C) | t(s) | | | TS (kgf/mm2) | El(%) | TS (kgf/mm2) | El(%) | ΔTS | ΔEl | |
| 41 | 15 | 550 | 73 | 1.37 | 2.42 | 53.6 | 30.5 | 62.8 | 28.7 | 9.2 | 1.8 | Comparative Example |
| 42 | 16 | 600 | 4.2 | 1 | 1.20 | 61.0 | 32.2 | 66.4 | 34.3 | 5.4 | 2.1 | Comparative Example |
| 43 | 16 | 550 | 14.0 | 1 | 0.78 | 64.7 | 33.7 | 66.4 | 34.3 | 1.7 | 0.6 | Example |
| 44 | 16 | 550 | 34.0 | 1 | 1.41 | 61.1 | 30.8 | 66.4 | 34.3 | 5.3 | 3.5 | Comparative Example |
| 45 | 17 | 520 | 19 | 0.79 | 0.34 | 45.6 | 39.5 | 45.3 | 40.1 | 0.3 | 0.6 | Example |
| 46 | 17 | 520 | 72 | 0.79 | 0.73 | 44.9 | 41.0 | 45.3 | 40.1 | 0.4 | 0.9 | Example |
| 47 | 17 | 520 | 90 | 0.79 | 0.85 | 42.9 | 40.5 | 45.3 | 40.1 | 2.4 | 0.4 | Comparative Example |
| 48 | 17 | 520 | 109 | 0.79 | 0.96 | 41.0 | 40.7 | 45.3 | 40.1 | 4.3 | 0.6 | Comparative Example |
| 49 | 17 | 500 | 102 | 0.79 | 0.32 | 45.0 | 40.3 | 45.3 | 40.1 | 0.3 | 0.2 | Example |
| 50 | 18 | 600 | 3.5 | 0.53 | 1.06 | 46.8 | 33.6 | 51.2 | 35.0 | 4.4 | 1.4 | Comparative Example |
| 51 | 18 | 550 | 4.0 | 0.53 | 0.38 | 50.8 | 34.8 | 51.2 | 35.0 | 0.4 | 0.2 | Example |
| 52 | 18 | 550 | 17 | 0.53 | 0.89 | 47.3 | 33.2 | 51.2 | 35.0 | 3.9 | 1.8 | Comparative Example |
| 53 | 18 | 550 | 28 | 0.53 | 1.24 | 45.9 | 33.3 | 51.2 | 35.0 | 5.3 | 1.7 | Comparative Example |
| 54 | 18 | 520 | 11 | 0.53 | 0.27 | 51.5 | 34.5 | 51.2 | 35.0 | 0.3 | 0.5 | Example |
| 55 | 18 | 520 | 34 | 0.53 | 0.47 | 52.0 | 34.9 | 51.2 | 35.0 | 0.8 | 0.1 | Example |
| 56 | 18 | 520 | 53 | 0.53 | 0.61 | 48.2 | 34.1 | 51.2 | 35.0 | 3.0 | 0.9 | Comparative Example |
| 57 | 18 | 500 | 21 | 0.53 | 0.18 | 51.5 | 34.8 | 51.2 | 35.0 | 0.3 | 0.2 | Example |
| 58 | 18 | 500 | 172 | 0.53 | 0.42 | 50.9 | 35.1 | 51.2 | 35.0 | 0.3 | 0.1 | Example |
| 59 | 19 | 520 | 22 | 0.42 | 0.37 | 45.0 | 39.0 | 46.1 | 39.2 | 1.1 | 0.2 | Example |
| 60 | 19 | 520 | 60 | 0.42 | 0.66 | 43.0 | 38.9 | 46.1 | 39.2 | 3.1 | 0.3 | Comparative Example |
| 61 | 19 | 500 | 123 | 0.42 | 0.35 | 45.7 | 39.3 | 46.1 | 39.2 | 0.4 | 0.1 | Example |
| 62 | 19 | 500 | 157 | 0.42 | 0.40 | 44.8 | 38.0 | 46.1 | 39.2 | 1.3 | 1.2 | Example |
| 63 | 19 | 500 | 207 | 0.42 | 0.47 | 42.7 | 37.8 | 46.1 | 39.2 | 3.4 | 1.4 | Comparative Example |
| 64 | 20 | 520 | 10 | 0.33 | 0.26 | 50.8 | 34.8 | 52.5 | 35.6 | 1.7 | 0.8 | Example |
| 65 | 20 | 520 | 24 | 0.33 | 0.39 | 48.7 | 33.0 | 52.5 | 35.6 | 3.8 | 2.6 | Comparative Example |
| 66 | 20 | 520 | 51 | 0.33 | 0.59 | 45.8 | 32.8 | 52.5 | 35.6 | 6.7 | 2.8 | Comparative Example |
| 67 | 20 | 500 | 47 | 0.33 | 0.23 | 52.3 | 35.1 | 52.5 | 35.6 | 0.2 | 0.5 | Example |
| 68 | 20 | 500 | 88 | 0.33 | 0.30 | 50.9 | 34.6 | 52.5 | 35.6 | 1.6 | 1.0 | Example |
| 69 | 20 | 500 | 132 | 0.33 | 0.37 | 47.7 | 32.8 | 52.5 | 35.6 | 4.8 | 2.8 | Comparative Example |
| 70 | 20 | 500 | 157 | 0.33 | 0.40 | 45.7 | 32.5 | 52.5 | 35.6 | 6.8 | 3.1 | Comparative Example |
| 71 | 21 | 520 | 12 | 0.19 | 0.28 | 38.8 | 42.0 | 41.2 | 41.6 | 2.4 | 0.4 | Comparative Example |
| 72 | 21 | 520 | 30 | 0.19 | 0.44 | 38.1 | 41.7 | 41.2 | 41.6 | 3.1 | 0.1 | Comparative Example |
| 73 | 21 | 500 | 15 | 0.19 | 0.17 | 40.0 | 41.1 | 41.2 | 41.6 | 1.2 | 0.5 | Example |
| 74 | 21 | 500 | 40 | 0.19 | 0.22 | 38.5 | 41.8 | 41.2 | 41.6 | 2.7 | 0.2 | Comparative Example |
| 75 | 21 | 500 | 63 | 0.19 | 0.26 | 38.3 | 41.7 | 41.2 | 41.6 | 2.9 | 0.1 | Comparative Example |
| 76 | 22 | 520 | 20 | 1.05 | 0.35 | 85.7 | 25.0 | 84.2 | 26.0 | 1.5 | 1.0 | Example |
| 77 | 23 | 520 | 20 | 1.05 | 0.35 | 87.2 | 23.2 | 87.8 | 24.0 | 0.6 | 0.8 | Example |
| 78 | 24 | 520 | 15 | 1.03 | 0.31 | 93.6 | 19.0 | 94.0 | 19.1 | 0.4 | 0.1 | Example |
| 79 | 25 | 520 | 15 | 1.08 | 0.31 | 83.2 | 25.6 | 84.8 | 26.0 | 1.6 | 0.4 | Example |
| 80 | 26 | 520 | 20 | 1.03 | 0.35 | 83.5 | 26.0 | 84.0 | 26.2 | 0.5 | 0.2 | Example |

**Claims**

1. A method for manufacturing a galvannealed steel sheet comprising the steps of:

preparing a hot-dip galvanized steel sheet consisting essentially of 0.05 to 0.30% C, 0.01 to 2.0% Si, 0.08 to 3.0% Mn, 0.003 to 0.1% P, 0 to 0.07% S, 0.01 to 2.5% Al, 0 to 0.007% N, by mass, and the balance being Fe and inevitable impurities;

applying alloying treatment to the hot-dip galvanized steel sheet; and

controlling time and temperature of the alloying treatment in accordance with the formula given below depending on the content of Si and of Al,

$$Si + Al \geqq 1.5 \times 10^{-7} \times t^{0.75} \times (T - 465)^3 + 0.117$$

where t is the total time (sec) of holding the steel sheet at 465 °C or higher temperature on alloying a coating layer thereon, and T is the average temperature(°C) of the steel sheet during the total time t (sec) of holding the steel sheet at 465°C or higher temperature on alloying the coating layer thereon.

2. A method for manufacturing a galvannealed steel sheet comprising the steps of:

preparing a hot-dip galvanized steel sheet consisting essentially of 0.05 to 0.30% C, 0.01 to 2.0% Si, 0.08 to 3.0% Mn, 0.003 to 0.1% P, 0 to 0.07% S, 0.01 to 2.5% Al, 0 to 0.007% N, by mass, further at least one element selected from the group consisting of 0.01 to 2.0% Cr, 0.005 to 2.0% V, and 0.005 to 2.0% Mo, by mass, and balance of Fe and inevitable impurities;

applying alloying treatment to the hot-dip galvanized steel sheet; and

controlling time and temperature of the alloying treatment in accordance with the formula given below depending on the content of Si, Al, Cr, Mo, and V,

$$Si + Al + 5 \times Cr + 15 \times Mo + 15 \times V \geqq 1.5 \times 10^{-7} \times t^{0.75}$$
$$\times (T - 465)^3 + 0.117$$

where t is the total time (sec) of holding the steel sheet at 465 °C or higher temperature on alloying a coating layer thereon, and T is the average temperature(°C) of the steel sheet during the total time t (sec) of holding the steel sheet at 465°C or higher temperature on alloying the coating layer thereon.

3. The method for manufacturing a galvannealed steel sheet according to claim 1, wherein the hot-dip galvanized steel sheet further contains at least one element selected from the group consisting of 0.01 to 0.1% Ti, 0.01 to 0. 1% Nb, 0.0003 to 0.0050% B, 0.005 to 2.0% Ni, and 0.005 to 2.0% Cu, by mass.

4. The method for manufacturing a galvannealed steel sheet according to claim 2, wherein the hot-dip galvanized steel sheet further contains at least one element selected from the group consisting of 0.01 to 0.1% Ti, 0.01 to 0. 1% Nb, 0.0003 to 0.0050% B, 0.005 to 2.0% Ni, and 0.005 to 2.0% Cu, by mass.

FIG. 1 (a)   FIG. 1 (b)

FIG. 1 (a)

EXAMPLE OF THE
RELATED ART

ELONGATION

O

RANGE OF VARYING
IN MECHANICAL
PROPERTIES

ELONGATION

O

RANGE OF VARYING
IN MECHANICAL
PROPERTIES

ALLOYING TREATMENT TEMPERATURE ⟶

ALLOYING TREATMENT TIME ⟶

FIG. 1 (b)

EXAMPLE OF THE
INVENTION

ELONGATION

O

X

RANGE OF VARYING
IN MECHANICAL
PROPERTIES

RANGE OF THE
INVENTION

TENSILE STRENGTH

O

X

RANGE OF VARYING
IN MECHANICAL
PROPERTIES

ALLOYING TREATMENT TEMPERATURE ⟶

ALLOYING TREATMENT TIME ⟶

**FIG. 2**

FIG. 3 (a)

ALLOYING TREATMENT TEMPERATURE: 600°C (s)

FIG. 3 (b)

ALLOYING TREATMENT TEMPERATURE: 550°C (s)

FIG. 3 (c)

ALLOYING TREATMENT TEMPERATURE: 520°C (s)

FIG. 3 (d)

ALLOYING TREATMENT TEMPERATURE: 500°C (s)

## INTERNATIONAL SEARCH REPORT

| | International application No. |
|---|---|
| | PCT/JP2004/019280 |

**A. CLASSIFICATION OF SUBJECT MATTER**
Int.Cl⁷ C23C2/28, C23C2/06, C22C38/00, C22C38/06, C22C38/58, C21D9/46

According to International Patent Classification (IPC) or to both national classification and IPC

**B. FIELDS SEARCHED**

Minimum documentation searched (classification system followed by classification symbols)
Int.Cl⁷ C23C2/00-C23C2/40, C22C38/00, C22C38/06, C22C38/58, C21D9/46

Documentation searched other than minimum documentation to the extent that such documents are included in the fields searched

| Jitsuyo Shinan Koho | 1922-1996 | Toroku Jitsuyo Shinan Koho | 1994-2005 |
|---|---|---|---|
| Kokai Jitsuyo Shinan Koho | 1971-2005 | Jitsuyo Shinan Toroku Koho | 1996-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-47547 A (Kawasaki Steel Corp.), 15 February, 2002 (15.02.02), Examples; table 1; column 8, lines 24 to 28 (Family: none) | 1,3 |
| X | JP 2001-303178 A (Sumitomo Metal Industries, Ltd.), 31 October, 2001 (31.10.01), Examples; table 1; column 14, lines 5 to 7 (Family: none) | 2,4 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 March, 2005 (29.03.05) | 19 April, 2005 (19.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)